# EUROPÄISCHE PATENTANMELDUNG

(11) **EP 1 199 826 A2**
(43) Veröffentlichungstag der Anmeldung: **24.04.2002**
(21) Anmeldenummer: 01250301.7
(22) Anmeldetag: 22.08.2001
(51) Int. Cl.: H04H 1/00

(54) **Verfahren zur Bereitstellung von Informationen an Teilnehmer eines Fernmeldenetzes und Fernmeldenetz für die Anwendung des Verfahrens**

(30) Priorität: 26.09.2000 DE 10047597; 26.03.2001 DE 10115745
(71) Anmelder: SIEMENS AKTIENGESELLSCHAFT, 80333 München (DE)
(72) Erfinder: Baese, Gero, 81371 München (DE); Fischer, Andre, 10965 Berlin (DE); Gebler, Martin, 82049 Pulach im Isartal (DE); Moritz, Peter, 85540 Haar (DE); Markgraf, Sabine, 82131 Gauting (DE); Prange, Stefan, Dr., 81476 München (DE); Schlossnikel, Annette, 81245 München (DE); Sibila, Arnd, 82272 Moorenweis (DE); Strobel, Thomas, 82131 Gauting (DE); Von Brockdorff, Christian, 82057 Icking (DE); Wilde, Jürgen, 82024 Taufkirchen (DE)

(57) **Zusammenfassung**

Die vorliegende Erfindung betrifft ein Verfahren zur Bereitstellung individualisierter Information aus einer Gesamtheit von Informationen für mindestens einen Teilnehmer eines Netzes, wobei das Verfahren mindestens die folgenden Schritte aufweist:
a. Übertragen der Gesamtheit von Informationen an den mindestens einen Teilnehmer des Netzes;
b. Zugänglichmachen der Gesamtheit von Informationen für den mindestens einen Teilnehmer des Netzes;
c. Bereitstellen einer geeigneten Applikations-Soft- und/oder Hardware für den mindestens einen Teilnehmer des Netzes zum individuellen Auswählen und Speichern von Informationen aus der Gesamtheit von Informationen.

Ferner ist Gegenstand der Erfindung ein Netzsystem zur Bereitstellung individualisierter Information aus einer Gesamtheit von Informationen für mindestens einen Teilnehmer des Netzsystems und ein entsprechendes Kommunikationsendgerät.

## Beschreibung

Die vorliegende Erfindung betrifft ein Verfahren zur Bereitstellung von Informationen für Teilnehmer eines Netzes und ein entsprechendes Netzsystem zur Realisierung des erfindungsgemäßen Verfahrens. Bei der stetig anwachsenden Informationsflut, sei es auf schriftlichem Weg, beispielsweise in Form von Zeitungen oder Magazinen oder über andere Medien, wie beispielsweise Fernsehen, Radio oder Internet, ist es für den einzelnen Nutzer der entsprechenden Medien sehr schwierig, einen Überblick über all diese Informationen zu bekommen. Aufgrund der Fülle an Information, die sich über die verschiedensten Bereiche erstreckt, ist er nicht in der Lage, schnell und einfach, die für ihn wesentliche und interessante Information herauszufiltern. Bevor der Nutzer zu dem gelangt, was er sucht, muss er viele für ihn unwichtige Information durchforsten. Zum einen kostet das viel Zeit, die für ihn uneffektiv ist, zum zweiten nimmt es dem Nutzer womöglich auch die Freude am steten Informiertsein.

Daher war es eine Aufgabe der Erfindung, ein Verfahren bereitzustellen, mit dem es möglich ist, individualisierte Informationen aus einer Gesamtheit von Informationen bereitzustellen, d.h. einer Person nur die von ihr gewählte und sie interessierende Information zu liefern, um somit einer Informationsüberflutung entgegenzuwirken bzw. vorzubeugen.

Gelöst wird diese Aufgabe durch das erfindungsgemäße Verfahren gemäß Anspruch 1. Vorteilhafte Ausführungsformen des Verfahrens sind in den entsprechenden Unteransprüchen angegeben.

Gemäß Anspruch 1 ist erfindungsgemäß ein Verfahren zur Bereitstellung individualisierter Information aus einer Gesamtheit von Informationen für mindestens einen Teilnehmer eines Netzes vorgesehen, wobei das Verfahren mindestens die folgenden Schritte aufweist:
a. Übertragen der Gesamtheit von Informationen an den mindestens einen Teilnehmer des Netzes;
b. Zugänglichmachen der Gesamtheit von Informationen für den mindestens einen Teilnehmer des Netzes;
c. Bereitstellen einer geeigneten Applikations-Soft- und/oder Hardware für den mindestens einen Teilnehmer des Netzes zum individuellen Auswählen und Speichern von Informationen aus der Gesamtheit von Informationen.

Bislang war eine Personalisierung bzw. eine Individualisierung von Informationen nur nach sehr groben Einteilungen möglich. Diese grobe Einteilung fand dabei im Allgemeinen in einer zentralen Stelle statt, bei der für jeden Teilnehmer ein Profil angelegt und gespeichert werden musste. Dieses zentral abgelegte Teilnehmerprofil ist aufgrund der großen Teilnehmerzahl und des damit verbundenen hohen Administrationsaufwands nur sehr grob einstellbar und keineswegs dynamisch änderbar. Anhand dieses nur sehr grob personalisierten Profils wurde in der zentralen Stelle die vorhandene Information gefiltert und jedem Teilnehmer die "personalisierte" und darum im Umfang reduzierte Information (Punkt-zu-Punkt) einzeln übertragen. Auch beim Fernsehen beispielsweise geht die Personalisierung von Informationen durch einen Teilnehmer nur grob vonstatten, nämlich durch eigenständiges Umschalten bzw. Auswählen zwischen ansonsten fertigen Programmen. Die Programme hingegen sind nicht auf die spezifischen Wünsche eines Teilnehmers abgestimmt. Insofern kann man auch hier nicht von einer Personalisierung im Sinne der Erfindung sprechen. Eine Personalisierung im Sinne der Erfindung bedeutet, dass einem Teilnehmer nur die von ihm gewünschten und auf ihn persönlich zugeschnittenen Inhalte bzw. Informationen übermittelt bzw. für ihn bereitgestellt werden.

Vorzugsweise werden die kompletten Inhalte bzw. Informationen, die zur Verfügung gestellt werden sollen, von einer extra dafür vorgesehenen Einheit im Netz, vorzugsweise von einem Service Provider, gesammelt bzw. von verschiedenen Mediengesellschaften, Verlagen oder Agenturen aufgekauft.

Erfindungsgemäß werden die kompletten Inhalte bzw. Informationen, beispielsweise die komplette Tagespresse oder alle Magazine, z. B. in der Nacht in einigen Minuten, von dem Service Provider zu mindestens einem, vorzugsweise zu mehreren Teilnehmern eines Netzes übertragen.

In einer bevorzugten Ausführungsform des erfindungsgemäßen Verfahrens erfolgt dabei das Übertragen der Gesamtheit von Informationen durch Broadcasting, d.h. durch Rundsenden der Daten. Dadurch ist es möglich, schnell und spektrumseffizient eine sehr große Datenmenge zu übermitteln.

Vorzugsweise findet die Übertragung bzw. das Broadcasting über einen, vorzugsweise von dem Service Provider geleasten, Satellitenfernsehkanal (DVB-S) oder über einen, vorzugsweise ebenfalls von dem Service Provider geleasten, terrestrischen digitalen Fernsehkanal (DVB-T) statt.

Erfindungsgemäß werden die Informationen dem mindestens einen Teilnehmer des Netzes, zu dem die Gesamtheit von Informationen übertragen wird, zugänglich gemacht, d.h. er kann die Daten empfangen und auch entsprechend abfragen, beispielsweise über ein geeignetes Kommunikationsendgerät bzw. Anzeigegerät. Denkbar ist dabei ein Computer, ein Mobilfunkgerät oder ein anderes mobiles Kommunikationsendgerät, wie beispielsweise ein Laptop oder ein SIMPAD. Über eine geeignete Applikations-Soft- und/oder Hardware wird dem mindestens einen Teilnehmer des Netzes erfindungsgemäß ermöglicht, individuell Informationen aus der Gesamtheit von Informationen auszuwählen und abzuspeichern, vorzugsweise auch auf einem geeigneten Drucker auszudrucken. Die Auswahl von Informationen aus der Gesamtheit von Informationen kann dabei von dem Teilnehmer jederzeit, auch recht dynamisch, geändert werden. Die Gesamtheit von Informationen kann als komplette "Rohinformation" gespeichert und anschließend bearbeitet werden, was allerdings einen großen Speicherplatz erfordert, oder sie kann "on the fly", d.h. noch während des Vorgangs des Übertragens, gefiltert werden, so dass nur die personalisierte Information, vorzugsweise mit benachbarten Informationen zur möglichen Nachfrage, gespeichert und entsprechend vorbereitet wird, d.h. ausgedruckt oder auf ein geeignetes Kommunikationsendgerät bzw. Anzeigegerät geladen wird.

Eine Individualisierung der Information aus einer Gesamtheit von Informationen kann auf verschiedene Art und Weise erfolgen. Zum einen kann von dem Teilnehmer des Netzes eine inhaltliche Individualisierung vorgenommen werden, d.h. er kann die Auswahl nach Themengebieten treffen, wie beispielsweise Sport, Wirtschaft, Börse, Kultur, Feuilleton, Klatsch oder Anzeigen. Denkbar ist es auch diese Auswahl nach Themengebieten noch weiter zu präzisieren, beispielsweise gezielt nur Informationen zum Neuen Markt Frankfurt, nur Formel 1 spezifische Informationen oder nur Kommunikationstechnik-Wirtschaftsinformationen auszuwählen. Ferner ist es dem Teilnehmer des Netzes erfindungsgemäß möglich, die Darstellungsform der von ihm ausgewählten Informationen zu bestimmen bzw. wie detailliert eine Information dargestellt werden soll. Er kann sich dafür entscheiden, nur Überschriften oder nur Überschriften mit dem 1. Absatz oder vollständige Artikel dargestellt zu bekommen.

In einer bevorzugten Ausführungsform des erfindungsgemäßen Verfahrens weist das Verfahren mindestens den folgenden weiteren Schritt auf:
d. Nachliefern von individuell ausgewählter zusätzlicher Information aus der Gesamtheit von Informationen auf Anfrage eines Teilnehmers an diesen Teilnehmer.

Falls ein Teilnehmer des Netzes beispielsweise nur Überschriften aus den von ihm ausgewählten Themengebieten als Darstellungsform gewünscht hat, so ist es somit möglich, den vollständigen Artikel auf Wunsch nachzuliefern. Der Teilnehmer ist dadurch von einer unnötigen Informationsflut bewahrt. Er kann sich über die ihn interessierenden Themen anhand von Überschriften oder Abstracts einen sehr schnellen Überblick verschaffen und gegebenenfalls, ganz nach seinem Wunsch, das ein oder andere Thema vertiefen, indem er den vollständigen Artikel nachfordert. Für den Teilnehmer ist das mit einem großen Zeitgewinn verbunden. Zudem ist er in der Lage, sich wirklich ausschließlich auf das zu konzentrieren, was er für sich für relevant hält.

In einer weiteren bevorzugten Ausführungsform des erfindungsgemäßen Verfahrens wird die Gesamtheit von Informationen einer festgelegten Auswahl an Teilnehmern des Netzes zugänglich gemacht, weiterhin vorzugsweise wird auch nur einer festgelegten Auswahl an Teilnehmern des Netzes eine geeignete Applikations-Soft- und/oder Hardware zum individuellen Auswählen und Speichern von Informationen aus der Gesamtheit von Informationen bereitgestellt. Das bedeutet, dass jeder Teilnehmer des Netzes, der eine Bereitstellung individualisierter Information aus einer Gesamtheit von Informationen für sich in Anspruch nehmen will, sich für diesen Dienst anmelden muss, d.h. er muss entsprechend "subskribiert" sein für diesen Dienst. Sodann erhält er Zugang zu der Gesamtheit von Informationen und eine geeignete Applikations-Soft- und/oder Hardware, die kompatibel ist mit seinem entsprechenden Endgerät, beispielsweise mit seinem Mobilfunkgerät, seinem Laptop oder seinem SIMPAD und mittels derer er Informationen aus der Gesamtheit von Informationen individuell auswählen, speichern und gegebenenfalls anzeigen und/oder ausdrucken lassen kann. Diese bevorzugte Ausführungsform des erfindungsgemäßen Verfahrens gibt der Einheit im Netz, d.h. dem Service Provider, der die Gesamtheit von Informationen von verschiedenen Verlagen, Agenturen und Publizisten sammelt und gegebenenfalls aufkauft, zum einen die Möglichkeit auf diese Weise seine entstehenden Kosten gezielt auf die für diesen Dienst angemeldeten bzw. registrierten Teilnehmer des Netzes umzuverteilen bzw. darüber hinaus gezielt Gebühren für die Bereitstellung dieses Dienstes zu erheben. Ferner ist die Bereitstellung eines derartigen Dienstes für den Service Provider ein gutes Werbemittel, was ihn von der Konkurrenz abhebt.

Ferner war es eine Aufgabe der vorliegenden Erfindung, ein zur Realisierung des erfindungsgemäßen Verfahrens geeignetes Netzsystem bereitzustellen.

Gelöst wurde diese Aufgabe durch ein erfindungsgemäßes Netzsystem gemäß Anspruch 7. Weitere bevorzugte Ausführungsformen sind Gegenstand der anschließenden Unteransprüche.

Gemäß Anspruch 7 ist erfindungsgemäß ein Netzsystem zur Bereitstellung individualisierter Information aus einer Gesamtheit von Informationen für mindestens einen Teilnehmer des Netzsystems vorgesehen, wobei das Netzsystem mindestens die folgenden Elemente aufweist:
a. eine Informationsquelle zur Bereitstellung der Gesamtheit von Informationen,
b. ein Übertragungsmedium zur Übertragung der Gesamtheit von Informationen an den mindestens einen Teilnehmer des Netzsystems,
c. eine Empfangseinheit für den mindestens einen Teilnehmer des Netzsystems zum Empfangen von Informationen,
d. eine Speichereinheit für den mindestens einen Teilnehmer des Netzsystems zum Speichern von Informationen,
e. ein Endgerät für den mindestens einen Teilnehmer des Netzsystems, wobei das mindestens eine Endgerät für den mindestens einen Teilnehmer des Netzsystems eine geeignete Applikations-Soft- und/oder Hardware aufweist, mittels derer der mindestens eine Teilnehmer des Netzsystems aus der Gesamtheit von Informationen individuell Informationen auswählen kann.

Bei der Informationsquelle handelt es sich vorzugsweise um einen Service Provider, der die Gesamtheit von Informationen zusammenstellt durch Sammeln von Informationen von verschiedenen Anbietern, d.h. beispielsweise von Verlagen, Agenturen und Publizisten. Der Service Provider selbst kauft diese Informationen beispielsweise auf und verbreitet diese beispielsweise über einen, vorzugsweise von ihm geleasten Satellitenfernsehkanal (DVB-S) und/oder terrestrischen digitalen Fernsehkanal (DVB-T).

Vorzugsweise ist durch eine von den Teilnehmern des Netzes vorzunehmende Registrierung bei dem Service Provider, d.h. durch entsprechende Subskription, eine Auswahl an Teilnehmern des Netzes festlegbar, für die die Bereitstellung individualisierter Information aus einer Gesamtheit von Informationen vornehmbar ist. Somit hat der Service Provider eine festgelegte Zielgruppe, von denen er für die Bereitstellung des Dienstes entsprechende Gebühren einfordern kann.

Bei dem Übertragungsmedium handelt es sich, wie bereits erwähnt, vorzugsweise um einen Satellitenfernsehkanal (DVB-S) und/oder um einen terrestrischen Fernsehkanal (DVB-T). Mittels Broadcasting (Rundsenden) lässt sich eine sehr große Menge an Daten, d.h. an Information, in relativ kurzer Zeit sehr spektrumseffizient übermitteln.

Als Empfangseinheit kann beispielsweise eine bei dem Teilnehmer lokalisierte DVB-Antenne fungieren.
In einer besonders bevorzugten Ausführungsform des erfindungsgemäßen Netzsystems handelt es sich bei dem Endgerät um ein mobiles Endgerät. Dadurch ist der Teilnehmer des Netzes, der für den Dienst registriert ist, jederzeit in der Lage, d.h. auch auf Reisen, von ihm gewünschte und ausgewählte Informationen aus der Gesamtheit von Informationen abzufragen. Als mobile Endgeräte sind dabei u.a. Mobilfunkgeräte denkbar sowie aber auch Laptops und SIMPADs.

Ferner ist es auch denkbar, die ausgewählte Information mittels einer geeigneten Druckereinheit auszudrucken. Dies kann unmittelbar geschehen oder erst nach Durchsicht der ausgewählten Information durch den entsprechend registrierten Teilnehmer des Netzes.

Darüber hinaus betrifft die Erfindung ein Kommunikationsendgerät, vorzugsweise ein mobiles Kommunikationsendgerät, das über eine geeignete Applikations-Soft- und/oder Hardware verfügt, mittels derer eine Gesamtheit von Information aus einem Netz zugänglich machbar ist und aus der Gesamtheit von Information individuell Information auswählbar ist. Bei der erfindungsgemäß Applikations-Soft- und/oder Hardware kann es sich im Falle einer Hardware beispielsweise um eine sogenannte "digital video broadcast plug-in card" handeln.

Der große Vorteil der vorliegenden Erfindung ist darin zu sehen, dass durch die Erfindung nicht ein Online-Exemplar beispielsweise einer bestimmten Zeitung bereitgestellt wird, sondern dass Nachrichten, Artikel, Kommentare aus verschiedenen Zeitungen, Magazinen und von anderen Informationslieferanten zur Verfügung stehen. Aus dieser so gebildeten Gesamtheit von Informationen kann nun ein Teilnehmer des Netzes die von ihm gewünschten Informationen selbst inhaltlich zusammenstellen und sich ebenfalls in von ihm wählbarer Form zur Verfügung stellen lassen. Diese Möglichkeit des Sich-Informierens kann er auf Reisen und zudem sehr spontan und schnell wahrnehmen. Gerade für Leute, die beruflich schnell und spontan auf spezifischen Gebieten informiert sein müssen, bietet die Erfindung erhebliche Vorteile. Aber auch für private Teilnehmer bietet die Erfindung große Vorteile. Spontane Planungen für die Abendgestaltung oder das Wochenende sind mittels der Erfindung schnell und problemlos möglich. Bei Auffinden beispielsweise einer geeigneten Veranstaltung ist es möglich, sogleich auch entsprechende Tickets online zu reservieren bzw. anzufordern. Durch die erfindungsgemäß gezielte individuelle Informationsmöglichkeit wird der Teilnehmer auch eher motiviert am Tagesgeschehen teilzunehmen. Er bekommt mehr Lust, sich überhaupt zu informieren. Die Mühe, sich stets aus einer Flut an Informationen diejenige auszusuchen, was wirklich für den einzelnen von Interesse ist, führt bei den Teilnehmern oft zu einer Art Lethargie hinsichtlich des Sich-Informierens; er verzichtet dann oft lieber auf jegliche Information. Durch die Erfindung hingegen wird das Interesse der einzelnen Personen wieder merklich gesteigert.

Weitere Vorteile und bevorzugte Ausführungsformen der Erfindung werden anhand der folgenden Figur aufgezeigt. Es zeigt:

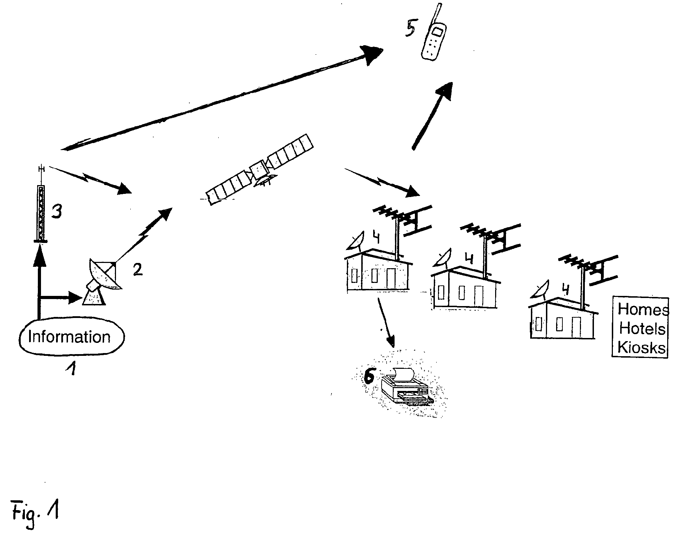

Fig. 1 Schematische Darstellung einer Ausführungsform eines erfindungsgemäßen Netzsystems

Figur 1 zeigt eine schematische Darstellung eines erfindungsgemäßen Netzsystems, mit dessen Hilfe eine Realisierung des erfindungsgemäßen Verfahrens zur Bereitstellung individualisierter Information aus einer Gesamtheit von Informationen möglich ist. Der Service Provider 1 sammelt bzw. kauft Informationen von verschiedenen Anbietern, wie beispielsweise von Verlagen, Agenturen oder Publizisten. Diese so gebildete Gesamtheit von Informationen stellt der Service Provider 1, vorzugsweise über Nacht in einigen Minuten, d.h. in etwa 30 bis 60 Minuten, per Broadcast zur Verfügung. Zur Übertragung nutzt der Service Provider 1 vorzugsweise einen Satellitenfernsehkanal 2 (DVB-S) und/oder einen terrestrischen digitalen Fernsehkanal 3 (DVB-T). Diese Art der Informationsübertragung ist sehr effizient und verhältnismäßig schnell. Die für den Dienst registrierten Teilnehmer 4 des Netzes haben Zugang zu den übertragenen Informationsdaten und mittels einer in ihrem Endgerät integrierten geeigneten Applikations-Soft- und/oder Hardware die Möglichkeit vor Ort eine Individualisierung der Informationen aus der Gesamtheit von Informationen vorzunehmen. Der Grad der Individualisierung kann jederzeit und auch relativ dynamisch von den Teilnehmern 4 des Netzes geändert werden. Die Gesamtheit von Informationen kann komplett gespeichert werden und erst anschließend entsprechend der gewünschten Individualisierung gefiltert werden, was allerdings einen recht großen Speicherplatz erfordert, oder sie kann noch während des Vorgangs des Übertragens bereits gefiltert werden. Die so gefilterte individualisierte Information kann dann unmittelbar auf ein mobiles Endgerät 5, wie beispielsweise ein Mobilfunkgerät, ein SIMPAD oder ein Laptop, geladen und angezeigt werden und/oder auf einer geeigneten Druckeinheit 6 ausgedruckt werden.

## Patentansprüche

1. Verfahren zur Bereitstellung individualisierter Information aus einer Gesamtheit von Informationen für mindestens einen Teilnehmer (4) eines Netzes, wobei das Verfahren mindestens die folgenden Schritte aufweist:
a. Übertragen der Gesamtheit von Informationen an den mindestens einen Teilnehmer (4) des Netzes;
b. Zugänglichmachen der Gesamtheit von Informationen für den mindestens einen Teilnehmer (4) des Netzes;
c. Bereitstellen einer geeigneten Applikations-Soft- und/oder Hardware für den mindestens einen Teilnehmer (4) des Netzes zum individuellen Auswählen und Speichern von Informationen aus der Gesamtheit von Informationen.

2. Verfahren nach Anspruch 1,
**dadurch gekennzeichnet,**
**dass** das Übertragen der Gesamtheit von Informationen in Schritt a. durch Broadcasting (Rundsenden) erfolgt.

3. Verfahren nach einem der Ansprüche 1 oder 2,
**dadurch gekennzeichnet,**
**dass** das Übertragen der Gesamtheit von Informationen in Schritt a. über einen Satellitenfernsehkanal (2) (DVB-S) und/oder über einen terrestrischen digitalen Fernsehkanal (3) (DVB-T) erfolgt.

4. Verfahren nach einem der vorhergehenden Ansprüche,
**dadurch gekennzeichnet,**
**dass** das Verfahren mindestens den folgenden weiteren Schritt aufweist:
d. Nachliefern von individuell ausgewählter zusätzlicher Information aus der Gesamtheit von Informationen auf Anfrage des mindestens einen Teilnehmers (4) an diesen Teilnehmer.

5. Verfahren nach einem der vorhergehenden Ansprüche,
**dadurch gekennzeichnet,**
**dass** in Schritt b. einer festgelegten Auswahl an Teilnehmern (4) des Netzes die Gesamtheit von Informationen zugänglich gemacht wird.

6. Verfahren nach einem der vorhergehenden Ansprüche,
**dadurch gekennzeichnet,**
**dass** in Schritt c. für eine festgelegte Auswahl an Teilnehmern (4) des Netzes die geeignete Applikations-Soft- und/oder Hardware bereitgestellt wird.

7. Netzsystem zur Bereitstellung individualisierter Information aus einer Gesamtheit von Informationen für mindestens einen Teilnehmer (4) des Netzsystems, wobei das Netzsystem mindestens die folgenden Elemente aufweist:
a. eine Informationsquelle (1) zur Bereitstellung der Gesamtheit von Informationen,
b. ein Übertragungsmedium (2, 3) zur Übertragung der Gesamtheit von Informationen an den mindestens einen Teilnehmer (4) des Netzsystems,
c. eine Empfangseinheit für den mindestens einen Teilnehmer des Netzsystems zum Empfangen von Informationen,
d. eine Speichereinheit für den mindestens einen Teilnehmer (4) des Netzsystems zum Speichern von Informationen,
e. ein Endgerät für den mindestens einen Teilnehmer (4) des Netzsystems,
**dadurch gekennzeichnet,**
**dass** das mindestens eine Endgerät für den mindestens einen Teilnehmer (4) des Netzsystems eine geeignete Applikations-Soft- und/oder Hardware aufweist, mittels derer der mindestens eine Teilnehmer (4) des Netzsystems aus der Gesamtheit von Informationen individuell Informationen auswählen kann.

8. Netzsystem nach Anspruch 7,
**dadurch gekennzeichnet,**
**dass** eine Auswahl an Teilnehmern (4) des Netzes festlegbar ist, für die die Bereitstellung individualisierter Information aus einer Gesamtheit von Informationen vornehmbar ist.

9. Netzsystem nach einem der Ansprüche 7 oder 8,
**dadurch gekennzeichnet,**
**dass** das Übertragungsmedium ein Satellitenfernsehkanal (2) (DVB-S) und/oder ein terrestrischer digitaler Fernsehkanal (3) (DVB-T) ist.

10. Netzsystem nach einem der Ansprüche 7 bis 9,
**dadurch gekennzeichnet,**
**dass** das Endgerät ein mobiles Endgerät (5) ist.

11. Kommunikationsendgerät, insbesondere mobiles Kommunikationsendgerät,
**dadurch gekennzeichnet,**
**dass** das Kommunikationsendgerät eine geeignete Applikations-Soft- und/oder Hardware aufweist, mittels derer eine Gesamtheit von Information aus einem Netz zugänglich machbar ist und aus der Gesamtheit von Information individuell Information auswählbar ist.
